# EUROPEAN PATENT SPECIFICATION

(11) **EP 0 472 961 B1**
(45) Date of publication and mention of the grant of the patent: **26.11.1997**
(21) Application number: 91113202.5
(22) Date of filing: 06.08.1991
(51) Int. Cl.: H04N 7/30

(54) **Coding method for increasing compressing efficiency of data in transmitting or storing picture signals**
Kodierverfahren zum Erhöhen der Effektivität der Datenkompression während der Übertragung oder der Abspeicherung von Bildsignalen
Procédé de codage pour augmenter l'efficacité de compression de données pendant la transmission ou le stockage de signaux d'image

(30) Priority: 31.08.1990 KR 1367390
(43) Date of publication of application: 04.03.1992
(73) Proprietor: SAMSUNG ELECTRONICS CO., LTD., Suweon-city, Kyungki-do (KR)
(72) Inventor: Kim, Ga Yeong, Gwangmyeong-city, Kyungki-do (KR)
(74) Representative: Lehn, Werner, Dipl.-Ing.

(56) References cited:
- DE-A- 3 940 682
- FR-A- 2 648 978
- US-A- 4 302 775
- US-A- 4 394 774
- US-A- 4 774 574
- ICASSP '89 - INTERNATIONAL CONFERENCE ON ACOUSTICS, SPEECH, AND SIGNAL PROCESSING, GLASGOW; vol. 3, 23 May 1989, IEEE, NEW YORK, US; pages 1842 - 1845 A.BASKURT ET AL. 'Encoding the location of spectral coefficients using quadtrees in transform image compression'

## Description

### FIELD OF THE INVENTION

The present invention relates to a coding method for increasing compressing efficiency of data in transmitting or storing picture signals. Particularly, the present invention relates to a coding method having a system for transmitting and storing the data after compressing it by subjecting a DCT coefficient (discrete cosine transform coefficient) to a run-length coding (to be called hereinafter "RLC") in accordance with the frequency characteristics of the DCT coefficient, after converting analogue picture signals to digital data and translating them to a frequency domain by utilizing the DCT, in which the data having excessive run lengths is expressed in bits of variable length run field by being summed, and non-zero ac coefficients are only coded in order to expressing a self-information, thereby compressing the picture data when coding them.

### BACKGROUND OF THE INVENTION

If analogue picture signals are processed after converting them to digital data in a system for processing picture data, there can be corrected the errors occurred during transmissions, recordings and regenerations by utilizing an interleave, an error correction code and an interpolation. Moreover, in the case of using a recording medium such as a tape or a disc, there is no degradation of the picture quality even if copy is carried out many times.

On the other hand, there is also such a disadvantage that the amount of the data is increased due to the analogue digital conversion (to be called hereinafter "A/D conversion"), which results in that the transmitting speed is slowed and a large recording capacity is required in recording.

In an attempt to solve the disadvantage, various picture data compressing methods have been proposed, and among which an RLC method has been widely used.

Figure 1 is a block diagram showing a constitution of the conventional RLC method comprising a zig-zag scanning section 1, a run length count section 2, a grouping section 3 and a Huffman encoder 4.

Figure 2 illustrates the scannings by the zig-zag scanning section 1 of Figure 1.

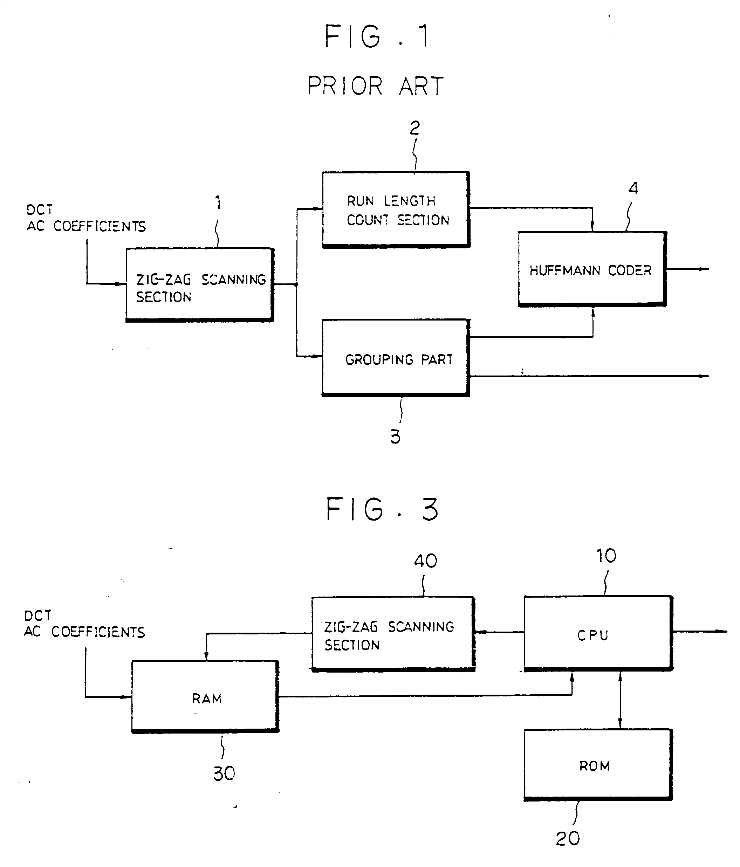

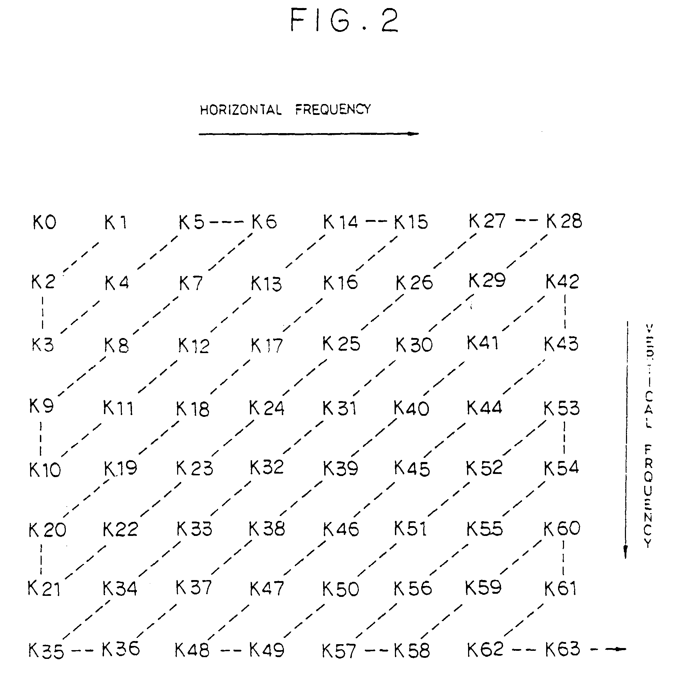

The conventional RLC method is now described referring to Figures 1 and 2. In order to compress picture signals, first the picture signals are subjected to an A/D conversion and then the data are divided into sub-block of 8x8 pixel units, a DCT being carried out on each of the sub-block thereafter. Then the 64 DCT coefficients K0 - K63 as shown in Figure 2 which are the result of the conversion from a time domain to a frequency domain, represent some frequency components depending on their positions. Among the DCT coefficients K0 - K63, the coefficient K0 which is zero in its vertical and horizontal frequencies is called dc coefficient, and the rest of the coefficients K1 - K63 are called ac coefficient. Since the dc coefficient is important in relation to the average values of the relevant sub-blocks, it is coded separately from the ac coefficients.

Generally, the ac coefficients of picture signal has such a nature that the higher their frequencies are, the greater the probability that their values are 0 is. Particularly, in carrying out a zig-zag scanning as shown in Figure 2, there is a high probability that 0 appears successively. From considering the fact, a coding is carried out by applying the RLC method as shown in Figure 1, thereby compressing the picture data.

Meanwhile, among the DCT coefficients of one sub-block, the dc coefficient is coded separately by applying the 1-dimensional Huffman coding method, while the rest 63 ac coefficients are subjected to zig-zag scannings as shown by the dotted lines in Figure 2, in such a manner that 0 should appear successively numerously so as for the run length to increase, the scanning being carried out by the zig-zag scanning section 1 of Figure 1.

The ac coefficients which have undergone the zig-zag scannings are separated into 0 coefficients and non-zero coefficients, and the coefficients in which 0 appears successively are grouped together, while codings are carried out for the grouped coefficients and the non-zero coefficients appearing next to the grouped 0 coefficients. That is, the run length count section 2 counts the number of the 0 coefficients until a non-zero coefficient appears after the inputting of the ac coefficients which have undergone the zig-zag scannings. Then, the grouping section 3 classifies the group involving the non-zero group into a separate group, based upon which the category and the lower bit are obtained.

If an instance is taken for the classification of the groups, classifications are made in the form of ±1, ±2∼±3, ±4∼±7....., and the categories for them are 1,2,3,....

Then the Huffman coder 4 produces and outputs ac codes based on the Huffman code table after receipt of the run lengths counted by the run length count section 2 and the categories grouped by the grouping section 3. Therefore, the lower bit for the non-zero coefficients of the grouping section 3 and the ac codes of the Huffman coder 4 can be transmitted or recorded.

The coding process described above is specified in the provision of the recommendation JPEG (on the data compressing) of the CCITT and ISO.

The RLC method is capable of coding 0 appearing between non-zero coefficients among the 63 ac coefficients but it has the problem that a large number of codes are required for the 0 - 15 run length and for the respective categories.

That is, since the coding becomes different for the respective non-zero coefficients depending on how many 0 exist before them, the table for defining the codes corresponding with the respective pairs of 0 coefficients and non-zero coefficients becomes large, and the average code lengths for the respective non-zero coefficients are increased. Accordingly, the coding procedure and the coding logic also become complicated. Furthermore, in the case that the successively appearing 0 are scattered with small numbers, for example, N00N00N....(N representing a non-zero coefficient), if a coding is carried out, the successively appearing 0, that is, the information for the run lengths are added to each of the coefficients in addition to the self information of the non-zero coefficients, which causes an increase of the total amount of the data.

Reference is made to US-A-4 774 574 taken together with US-A-4 302 775, to which US-A-4 774 574 refers. Together these references disclose a coding method for increasing the compressing efficiency of data in transmitting or storing picture signals including a CPU for controlling an overall system, a ROM for storing a coding table and an execution program for the CPU, a RAM for storing DCT ac coefficients of the video data and outputting the stored ac coefficients to the CPU by a predetermined control, and a zig-zag scanning section for controlling the RAM so as for the ac coefficients stored in the RAM to be zig-zag scanned under the control of the CPU and to be outputted to the CPU, the method comprising a first step of zig-zag scanning and reading ac coefficients stored in said RAM by controlling said zig-zag scanning section, and judging as to whether or not said read ac coefficient is 0, a second step of grouping and coding only the non-zero coefficients on the basis of a coding table stored in said ROM, a third step of returning to the first step if the ac coefficients for one sub-block are completely processed, by checking, after coding the ac coefficients, when the ac coefficient is 0 at the first step and when ac coefficients are non-zero at the second step, and a fourth step for outputting an EONZ code showing the completion of the coding of the non-zero coefficients if it is found at the third step that the non-zero coefficients for one sub-block are completely processed.

### SUMMARY OF THE INVENTION

It is the object of the present invention to provide a coding method for compressing the picture data in transmitting or storing the picture data, in which the run lengths for the DCT ac coefficients of the picture data are expressed by adopting a separate variable length run field, and the non-zero ac coefficients are coded in such a manner as to show only the self information, thereby increasing the coding efficiency, reducing the average lengths of the codes, and ultimately compressing the amount of the data.

According to the invention, there is provided a coding method for compressing picture data in transmitting or storing picture signals involving: a CPU for controlling an overall system, a ROM for storing a coding table and an execution program for the CPU, a RAM for storing sub-blocks of DCT ac coefficients of the video data and outputting the stored ac coefficients to the CPU by a predetermined control, and a zig-zag scanning section for controlling the RAM so that ac coefficients stored in the RAM are zig-zag scanned under the control of the CPU and are outputted to the CPU, the method comprising: a first step of initialising a run field, a count and a coefficient number, a second step of reading ac coefficients stored in said RAM by zig-zag scanning said sub-block and controlling said zig-zag scanning section, a third step of shifting the run field by one bit toward the upper bits and inserting zero into the lowermost bit, a fourth step of judging as to whether said read ac coefficient is zero or not, a fifth step of increasing both said run field and said count by one only if it is found at the fourth step that said read ac coefficient is non-zero, a sixth step of grouping, coding and outputting said read ac coefficient on the basis of a coding table stored in said ROM only if it is found at the fourth step that said read ac coefficient is non-zero, a seventh step of judging as to whether all of the ac coefficients for one sub-block are completely processed by checking the coefficient number, an eighth step of increasing the coefficient number by one and returning to the second step if it is found at the seventh step that not all of the ac coefficients for one sub-block are completely processed, a ninth step for outputting an EONZ code showing the completion of the coding of the non-zero coefficients if it is found at the seventh step that all of the ac coefficients for one sub-block are completely processed, and a tenth step of coding the run field if it is found at the seventh step that all of the ac coefficients for one sub-block are completely processed, whereby in said tenth step of coding are included: first sub-steps for removing from said run field the invalid upper bits, in order to leave only the valid lower bits, when said count is not zero, a second sub-step for outputting the uppermost bit of said run field; a third sub-step for checking as to whether the whole of said run field has been outputted up to the last '1' bit according to whether said count is 1, and fourth sub-steps for decreasing said count by 1 and for shifting said run field by 1 bit toward the upper bits if it is found at the third sub-step that not the whole of said run field has been outputted, said second, third and fourth sub-steps being repeated only until the whole run field has been outputted up to the last '1' bit, as determined by said third step.

### BRIEF DESCRIPTION OF THE DRAWINGS

The above object and other advantages of the present invention will become more apparent by describing in detail the preferred embodiment of the present invention with reference to the attached drawings in which:
Figure 1 is a block diagram showing the constitution of the conventional device;
Figure 2 illustrates a zig-zag scanning method;

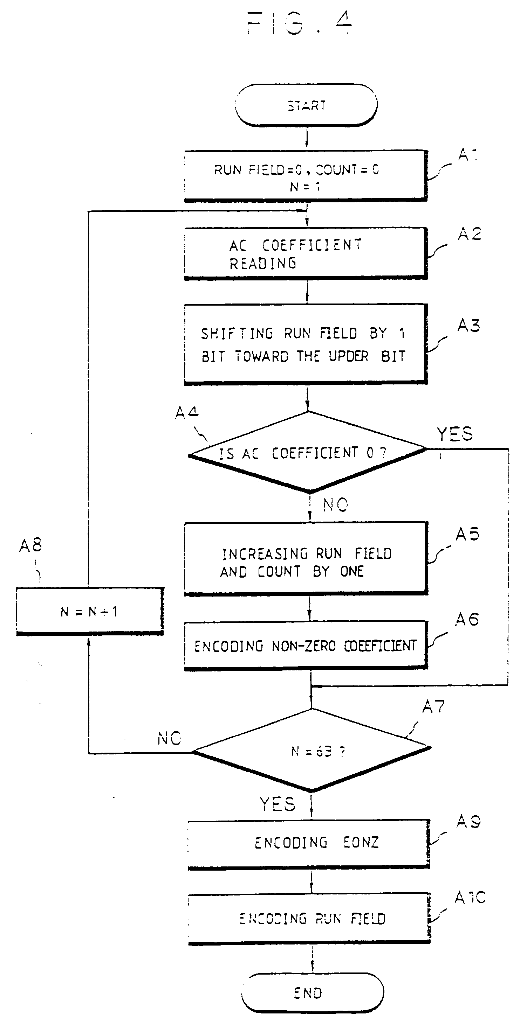

Figure 3 is a block diagram showing the constitution of the device according to the present invention;

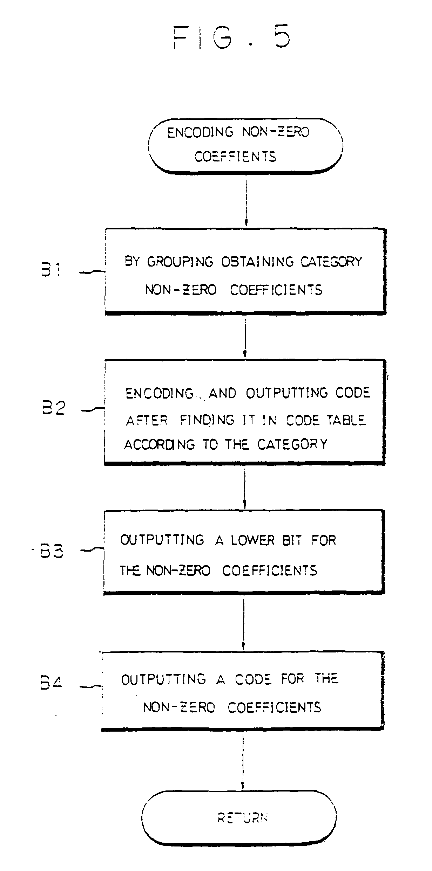

Figure 4 is a flow chart according to the present invention;
Figure 5 is a flow chart for the non-zero coefficients as a part of Figure 4.

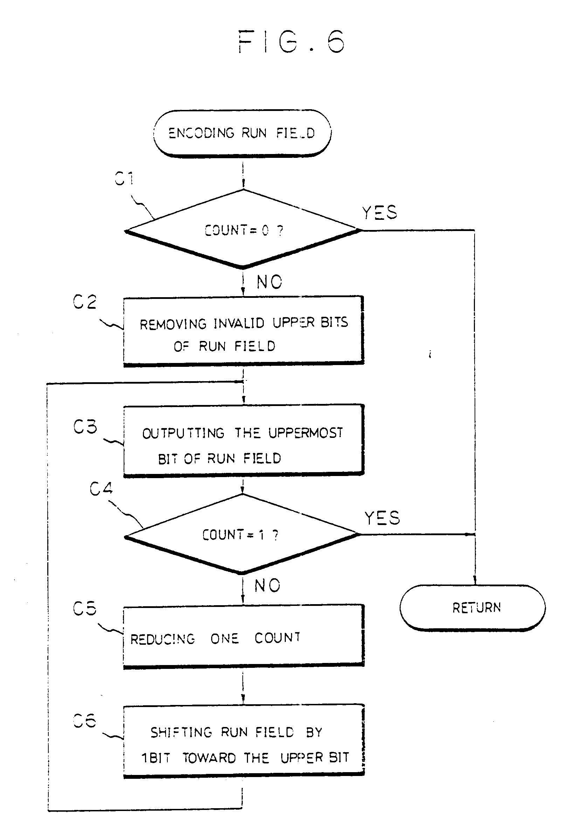

Figure 6 is a flow chart for the run field coding as a part of Figure 4.

### DESCRIPTION OF THE PREFERRED EMBODIMENT

Figure 3 is a block diagram showing the constitution of the present invention, in which the device includes a CPU 10 for controlling the overall system, a ROM 20 for storing the execution programs for the CPU 10 and the tables for coding, a RAM 30 for storing the DCT ac coefficients of picture data after receipt of them and for outputting the stored ac coefficients to the CPU 10 based on the controls of the CPU 10, and a zig-zag scanning section 40 for controlling the RAM 30 so as for the ac coefficients of the RAM 30 to be zig-zag scanned under the control of the CPU 10 in order for the scanned data to be outputted to the CPU 10.

Figure 4 is a flow chart showing the method of the present invention, in which the method includes a first step of initializing the run fields, the count and the coefficient, a second step of reading the ac coefficients by zig-zag scanning them and judging as to whether the read ac coefficients are 0 or not after shifting the run fields by one bit toward the upper bits, a third step of increasing by one the run field and the count if the ac coefficients of the second step 2 are non-zero coefficients, a fourth step of grouping and coding only the non-zero coefficients, a fifth step of checking as to whether the ac coefficients of one sub-block are successfully processed after coding the non-zero ac coefficients in the fourth step and when the ac coefficients are 0 in the second step and then coding the next non-zero coefficients by repeatedly carrying out the second, third and fourth steps if the ac coefficients of one sub-block are not completely processed, a sixth step of outputting an EONZ code (end of non-zero code) for showing the completion of the coding of the non-zero coefficients if coding of the non-zero coefficients for one sub-block is completed in the fifth step, and a seventh step of coding the run fields for the ac coefficients.

The flow chart of Figure 4 shows the operating sequence of the CPU of Figure 3. Meanwhile, the run field of Figure 4 is for expressing the run length when coding ac coefficients, and it can have a variable length between 0 and 63 bits, with each bit showing the 0 or non-zero state for the ac coefficient for the relevant frequency.

Figure 5 is a flow chart for coding the non-zero coefficients at the fourth step. Figure 6 is a flow chart for coding the run fields at the seventh step.

The present invention will be described in further detail referring to Figures 3 to 6.

After the power source is turned on and the picture signals are A/D converted, upon which, when DCTs are carried out for each of the sub-blocks of 8x8 pixels and the rest 63 coefficients excluding the dc coefficient are stored into the RAM 30 of Figure 3, the CPU 10 is initialized at a block A1 of Figure 4, with the run fields and the count being set 0 and with the coefficient number being set to 1, and then, at a block A2, the AC coefficients stored in the RAM 30 are read.

At this time, the CPU 10 reads the ac coefficients stored in the RAM 30 by zig-zag scanning them and by controlling the zig-zag scanning section 40.

The run field is initialized at the block A1 for indicating as to whether the respective bit has 0 for the ac coefficient for the relevant frequency. The count is for showing the number of the non-zero coefficients among the 63 ac coefficients. The number N of the coefficients is for showing as to how many ac coefficients among the 63 ac coefficients are coded.

At a block A3, the run fields for the unsigned 63 bits are shifted by one bit toward the upper bit and then 0 is inserted into the lowermost bit, thereby making it ready for memorizing as to whether the read ac coefficients are 0 or not before advancing to a block A4.

At the block A4, a judgement is made as to whether the read ac coefficient is 0 or not, and if it is not 0, the relevant bit of the run field is set to "1" at a block A5. Then the count is increased by one, and then, it is advanced to a block A6 where a coding routine for coding the non-zero coefficients as shown in Figure 5 is performed. That is, at a block B1 of Figure 5, the non-zero coefficients are grouped based on the coding table stored in the ROM 20, thereby obtaining a category.

A checking is made to which group of 1, 2-3, 4-7... the absolute value of the non-zero coefficient belongs, thereby obtaining the categories 1,2,3,....

Then, at a block B2, the non-zero coefficients are coded after finding the codes from the table as shown below and stored in the ROM 20 in advance and outputs them before advancing to a block B3.

**< Table 1 >**

| Category | ac coefficient | ac code |
|---|---|---|
| 2 | ±(2 - 3) | 100 |
| 3 | ±(4 -7) | 101 |
| 4 | ±(8 -15) | 110 |
| 5 | ±(16 - 31) | 1110 |
| 6 | ±(32 - 63) | 11110 |
| 7 | ±(64 - 127) | 111110 |
| 8 | ±(128 - 255) | 1111110 |
| 9 | ±(256 - 511) | 11111110 |
| 10 | ±(512 - 1023) | 111111110 |
| EONZ | | 00 |

Table 1 is one example of coding tables, and if the value of a non-zero coefficient is -9 (its absolute value being 9), its category is 4 and its code is 110.

At the block B3, the lower bit is obtained for the non-zero coefficient, and if the absolute value of the non-zero coefficient is 9, the lower bit is obtained in the manner described below. That is, the lower bit of the non-zero coefficient showing which of 8 - 15 (category 4) it belongs to is found, and it is outputted from the lowermost bit. In this case, the number of the lower bits will be the category number less 1.

Then, at a block B4, a sign for the non-zero coefficient is outputted in such a manner that, if it is positive, "1" is outputted, and if it is negative, "0" is outputted.

As described above, the non-zero coefficient itself is coded regardless of the run length in contrast to the conventional method, resulting in that the coding table becomes smaller, and the encoding and decoding processes become simpler. Further, only one code is assigned to each category, therefore, the average length of the code word becomes shorter, while codings become possible for larger numbers of categories.

Upon completion of the coding for non-zero coefficient in the manner described above, the function is returned to carry out the block A7 of Figure 4. If it is found that the ac coefficient is 0 as the result of the judgement at the block A4, then the block A7 is carried out.

At the block A7, a checking is made as to whether the number N of the coefficient is 63, which is for judging as to how many ac coefficients have been processed by now. That is, a judgement is made as to how many ac coefficients have been processed for one sub-block.

If it is found as the result of the checking that the number N of the coefficients is not 63, the function is advanced to a block A8 where the current coefficient number N is increased by 1. Then a looping is carried out to the block A2 from which the above described process is repeated. If the coefficient number N is 63, it is decided that the processing of the ac coefficients for one sub-block has been completed, and the function is advanced to a block A9. At the block A9, an EONZ code is outputted indicating the completion of the coding of the non-zero coefficients as shown in Table 1 and then the function is advanced to a block A10 where a run field coding routine is performed as shown in Figure 6.

That is, at a block C1 of Figure 6, a checking is made as to whether the count is 0. That is, in checking as to whether the non-zero coefficient was 0 at the previous step, if it is 0, a returning is carried out because it means that all ac coefficients are zero, while, if it is not 0, the invalid upper bits are removed by shifting out them in order to leave only the valid lower bits among the 63 bits of the whole run field at a block C2.

At a block C3, the uppermost bit of the run fields is outputted and then the function advances to a block C4 where a checking is made as to whether the count is 1. That is, the whole of the run field has been outputted, and if the count is not 1, it is judged that the run field has not been wholly outputted. Therefore, at a block C5, the current count value is decreased by 1, and then a block C6 is carried out.

At the block C6, the run fields are shifted by one bit toward the upper bits, so that the information bit for the next ac coefficient occupies the uppermost bit. Then a looping is carried out to the block C3 where the above described process is repeated until the run fields are all outputted.

Then the run field coding process is carried out in the manner described above, and upon outputting all the run fields, a return is carried out to terminate the operation.

As described above, for the ac coefficients for a sub-block, the outputting is made after bundling the scattered run length into run field of 63 bits. Of the 63 ac coefficients, if the ac coefficient is 0, then 0 is outputted, while, if the ac coefficient is not 0, then "1" is outputted, but in such a manner that the outputting is made not for all the 63 bits but only for "1" bits to the last "1" bit.

That is, the unnecessary "0" bits are not outputted, so that the amount of the picture data can be compressed. Therefore, the run length information is not increased to a great volume like in the case of the conventional method.

Accordingly, the run field together with the ac code, the lower bit and the sign for the non-zero coefficient are transmitted through a proper transmitting path or recorded on a proper recording medium. Thus the volume of the data is greatly reduced, so that the transmitting speed can be improved as well as recording a larger amount of data on the same recording medium.

The present invention can be applied to a digital VTR, CDI(compact disc interactive), digital camera, electronic game machines and the like which are the media capable of recording and regenerating data after compressing and coding them. The present invention can also be applied to color facsimile, video telephone, video conference system, electronic post box, color television and the like which are capable of transmitting the video data after compressing them. The present invention can also be applied to ID TV, ED TV, HD TV and multi-function VTR in which a large capacity of memory is required for digital processing of video signals.

As described above, the present invention uses a coding method which is capable of compressing the data based on the RLC method during a transmission or storing of picture data. According to the method of the present invention, the run length for the DCT ac coefficients for the picture data is expressed using separate variable length run fields.

Meanwhile, the non-zero ac coefficient is for coding in such a manner that only the self information can he expressed. Thus the ac coefficients are coded regardless of the run length, resulting in that the size of the coding table can be reduced, that the average length of the code word can be shortened, and that the encoding and decoding are rendered simpler. Further, the run length is coded by incorporating it into the variable length run fields, with the result that the run length information can be greatly reduced.

The invention is in no way limited to the embodiment described hereinabove. Various modifications of the disclosed embodiment as well as other embodiments of the invention will become apparent to persons skilled in the art upon reference to the description of the invention.

## Claims

1. A coding method for compressing picture data in transmitting or storing picture signals involving:
- a CPU (10) for controlling an overall system;
- a ROM (20) for storing a coding table and an execution program for the CPU;
- a RAM (30) for storing sub-blocks of DCT ac coefficients of the video data and outputting the stored ac coefficients to the CPU by a predetermined control; and
- a zig-zag scanning section (40) for controlling the RAM so that ac coefficients stored in the RAM are zig-zag scanned under the control of the CPU and are outputted to the CPU;
the method comprising:
- a first step (A1) of initializing a run field, a count and a coefficient number;
- a second step (A2) of reading ac coefficients stored in said RAM (30) by zig-zag scanning said sub-block and controlling said zig-zag scanning section (40);
- a third step (A3) of shifting the run field by one bit toward the upper bits and inserting zero into the lowermost bit;
- a fourth step (A4) of judging as to whether said read ac coefficient is zero or not;
- a fifth step (A5) of increasing both said run field and said count by one only if it is found at the fourth step that said read ac coefficient is non-zero;
- a sixth step (A6) of grouping, coding and outputting said read ac coefficient on the basis of a coding table stored in said ROM (20) only if it is found at the fourth step that said read ac coefficient is non-zero;
- a seventh step (A7) of judging as to whether all of the ac coefficients for one sub-block are completely processed by checking the coefficient number;
- an eighth step (A8) of increasing the coefficient number by one and returning to the second step if it is found at the seventh step that not all of the ac coefficients for one sub-block are completely processed;
- a ninth step (A9) for outputting an EONZ code showing the completion of the coding of the non-zero coefficients if it is found at the seventh step that all of the ac coefficients for one sub-block are completely processed; and
- a tenth step (A10) of coding the run field if it is found at the seventh step that all of the ac coefficients for one sub-block are completely processed, whereby in said tenth step of coding are included: first sub-steps (C1, C2) for removing from said run field the invalid upper bits, in order to leave only the valid lower bits, when said count is not zero; a second sub-step (C3) for outputting the uppermost bit of said run field; a third sub-step (C4) for checking as to whether the whole of said run field has been outputted up to the last '1' bit according to whether said count is 1; and fourth sub-steps (C5, C6) for decreasing said count by 1 and for shifting said run field by 1 bit toward the upper bits if it is found at the third sub-step that not the whole of said run field has been outputted, said second, third and fourth sub-steps being repeated only until the whole run field has been outputted up to the last '1' bit, as determined by said third step.

## Patentansprüche

1. Codierverfahren zum Komprimieren von Bilddaten beim Übertragen oder Speichern von Bildsignalen, unter Beteiligung
- einer CPU (10) zum Steuern eines Gesamtsystems;
- eines ROM (20) zum Speichern einer Codiertabelle und eines Ausführungsprogramms für die CPU;
- eines RAM (30) zum Speichern von Unterblöcken von DCT-Wechselspannungskoeffizienten der Videodaten und Ausgeben der gespeicherten Wechselspannungskoeffizienten an die CPU mittels einer vorbestimmten Steuerung; und
- eines Zick-Zack-Abtastabschnittes (40) zum Steuern des RAM so, daß in dem RAM gespeicherte Wechselspannungskoeffizienten unter der Steuerung der CPU zick-zack-abgetastet und an die CPU ausgegeben werden;
wobei das Verfahren umfaßt:
- einen ersten Schritt (Al) des Initialisierens eines Lauffeldes, einer Zählung und einer Koeffizientennummer;
- einen zweiten Schritt (A2) des Lesens von in dem RAM (30) gespeicherten Wechselspannungskoeffizienten durch Zick-Zack-Abtasten des Unterblockes und Steuern des Zick-Zack-Abschnittes (40);
- einen dritten Schritt (A3) des Verschiebens des Lauffeldes um ein Bit zu den oberen Bits hin und Einfügen von Null in das unterste Bit;
- einen vierten Schritt (A4) des Beurteilens, ob der gelesene Wechselspannungskoeffizient Null ist oder nicht;
- einen fünften Schritt (A5) des Vergrößerns von sowohl dem Lauffeld als auch der Zählung um Eins, nur, falls im vierten Schritt gefunden wird, daß der gelesene Wechselspannungskoeffizient ungleich Null ist;
- einen sechsten Schritt (A6) des Gruppierens, Codierens und Ausgebens des gelesenen Wechselspannungskoeffizienten auf der Grundlage einer in dem ROM (20) gespeicherten Codiertabelle nur, falls im vierten Schritt gefunden wird, daß der gelesene Wechselspannungskoeffizient ungleich Null ist;
- einen siebten Schritt (A7) des Beurteilens, ob alle der Wechselspannungskoeffizienten für einen Unterblock vollständig verarbeitet sind, durch Prüfen der Koeffizientennummer;
- einen achten Schritt (A8) des Vergrößerns der Koeffizientennummer um Eins und Zurückkehren zum zweiten Schritt, falls im siebten Schritt gefunden wird, daß nicht alle der Wechselspannungskoeffizienten für einen Unterblock vollständig verarbeitet worden sind;
- einen neunten Schritt (A9) zum Ausgeben eines EONZ-Codes, der den Abschluß der Codierung der Koeffizienten ungleich Null zeigt, falls im siebten Schritt gefunden wird, daß alle der Wechselspannungskoeffizienten für einen Unterblock vollständig verarbeitet sind; und
- einen zehnten Schritt (A10) des Codierens des Lauffeldes, falls im siebten Schritt gefunden wird, daß alle der Wechselspannungskoeffizienten für einen Unterblock vollständig verarbeitet worden sind, wodurch in dem zehnten Schritt des Codierens enthalten sind: erste Unterschritte (C1, C2) zum Entfernen der ungültigen oberen Bits von dem Lauffeld, um nur die gültigen unteren Bits zu belassen, wenn die Zählung ungleich Null ist; einen zweiten Unterschritt (C3) zum Ausgeben des obersten Bits des Lauffeldes; einen dritten Unterschritt (C4) zum Prüfen, ob das gesamte Lauffeld bis zum letzten Bit "1" ausgegeben wird, demgemäß, ob die Zählung 1 ist; und vierte Unterschritte (C5, C6) zum Verringern der Zählung um 1 und zum Verschieben des Lauffeldes um 1 Bit zu den oberen Bits hin, falls im dritten Unterschritt gefunden wird, daß nicht das gesamte Lauffeld ausgegeben worden ist, wobei die zweiten, dritten und vierten Unterschritte wiederholt werden, nur bis das gesamte Lauffeld bis zum letzten Bit "1" ausgegeben worden ist, wie durch den dritten Schritt bestimmt wird.

## Revendications

1. Procédé de codage destiné à la compression des données d'image lors de la transmission ou de la mémorisation de signaux d'image impliquant :
- une unité centrale (10) destinée à commander le système global,
- une mémoire morte (20) destinée à mémoriser une table de codage et un programme d'exécution pour l'unité centrale,
- une mémoire vive (30) destinée à mémoriser des sous-blocs de coefficients de composantes périodiques DCT des données vidéo et à sortir les coefficients de composantes périodiques mémorisés vers l'unité centrale grâce à une commande prédéterminée, et
- une section d'analyse en zigzag (40) destinée à commander la mémoire vive de sorte que les coefficients de composantes périodiques mémorisés dans la mémoire vive soient analysés en zigzag sous la commande de l'unité centrale et soient sortis vers l'unité centrale,
le procédé comprenant :
- une première étape (A1) consistant à initialiser un champ de suite, un comptage et un nombre de coefficients,
- une seconde étape (A2) consistant à lire des coefficients de composantes périodiques mémorisés dans ladite mémoire vive (30) grâce à une analyse en zigzag dudit sous-bloc et à commander ladite section d'analyse en zigzag (40),
- une troisième étape (A3) consistant à décaler le champ de suite de un bit vers les bits supérieurs et à insérer la valeur 0 dans le bit le plus faible,
- une quatrième étape (A4) consistant à évaluer si ledit coefficient de composante périodique lu vaut 0 ou non,
- une cinquième étape (A5) consistant à augmenter à la fois ledit champ de suite et ledit comptage de un uniquement s'il se trouve à la quatrième étape que ledit coefficient de composante périodique lu est non nul,
- une sixième étape (A6) consistant à regrouper, à coder et à sortir ledit coefficient de composante périodique lu sur la base d'une table de codage mémorisée dans ladite mémoire morte (20) uniquement s'il se trouve à la quatrième étape que ledit coefficient de composante périodique lu est non nul,
- une septième étape (A7) consistant à évaluer si la totalité des coefficients de composantes périodiques d'un sous-bloc est complètement traitée en contrôlant le nombre de coefficients,
- une huitième étape (A8) consistant à augmenter le nombre de coefficients de un et à revenir à la seconde étape s'il se trouve à la septième étape que la totalité des coefficients de composantes périodiques d'un sous-bloc n'est pas complètement traitée,
- une neuvième étape (A9) destinée à sortir un code EONZ indiquant l'achèvement du codage des coefficients non nuls s'il se trouve à la septième étape que la totalité des coefficients de composantes périodiques d'un sous-bloc est complètement traitée, et
- une dixième étape (A10) consistant à coder le champ de suite s'il se trouve à la septième étape que la totalité des coefficients de composantes périodiques d'un sous-bloc est complètement traitée, d'où il résulte que dans ladite dixième étape de codage sont incluses : des premières sous-étapes (C1, C2) destinées à enlever dudit champ de suite les bits supérieurs invalides, de manière à ne laisser que les bits inférieurs valides, lorsque ledit comptage est non nul, une seconde sous-étape (C3) destinée à sortir le bit le plus fort dudit champ de suite, une troisième sous-étape (C4) destinée à contrôler si la totalité dudit champ de suite a été sortie jusqu'au dernier bit à "1" conformément à ce que ledit comptage vaut 1, et des quatrièmes sous-étapes (C5, C6) destinées à diminuer ledit comptage de 1 et à décaler ledit champ de suite de 1 bit vers les bits supérieurs s'il se trouve à la troisième sous-étape que la totalité dudit champ de suite n'a pas été sortie, lesdites seconde, troisième et quatrièmes sous-étapes n'étant répétées que jusqu'à ce que le champ de suite entier ait été sorti jusqu'au dernier bit à "1", comme on peut le déterminer grâce à ladite troisième étape.
